# EUROPÄISCHE PATENTANMELDUNG

(11) **EP 1 905 745 A1**
(43) Veröffentlichungstag der Anmeldung: **02.04.2008**
(21) Anmeldenummer: 06025714.4
(22) Anmeldetag: 12.12.2006
(51) Int. Cl.: C02F 3/26, C02F 1/44

(54) **Verfahren zur biologischen Reinigung von organisch belasteten Abwässern**

(30) Priorität: 27.09.2006 DE 102006045497
(71) Anmelder: Linde Aktiengesellschaft, 65189 Wiesbaden (DE)
(72) Erfinder: Knab, Volker, 47877 Willich (DE); Ohlwein, Marc, 22159 Hamburg (DE)
(74) Vertreter: Gellner, Bernd

(57) **Zusammenfassung**

Die Erfindung beschreibt ein Verfahren zur biologischen Reinigung von organisch belasteten Abwässern in einem Reaktor oder Druckreaktor, bei dem die Inhaltsstoffe unter aeroben Bedingungen mikrobiell umgesetzt werden und das behandelte Abwasser anschließend durch eine Membran- oder Ultrafiltration vom biologischen Schlamm abgetrennt wird. Die aeroben Bedingungen im Reaktor werden durch die Begasung mit reinem Sauerstoff hergestellt.

## Beschreibung

Die Erfindung betrifft ein Verfahren zur biologischen Reinigung von organisch belasteten Abwässern in einem Reaktor oder Druckreaktor, bei dem die Inhaltsstoffe unter aeroben Bedingungen mikrobiell umgesetzt werden und das behandelte Abwasser anschließend durch eine Membran- oder Ultrafiltration vom biologischen Schlamm abgetrennt wird.

Aus DE3709174 und EP0503649 sind bereits Verfahren und Vorrichtungen zur biologischen Reinigung von organisch belasteten Abwässern in einem Reaktor bekannt. Nach dem Stand der Technik erfolgt die mikrobielle Umsetzung der organischen Inhaltsstoffe unter Überdruck und die anschließende Abtrennung des behandelten Abwassers vom biologischen Schlamm mittels einer Membran- oder Ultrafiltration. Bei der aeroben Behandlung der organisch belasteten Abwässer wird nach dem Stand der Technik Luft unter hohem Druck in den Reaktor eingebracht. Die Einbringung der Luft unter hohem Druck und das Aufrechterhalten des hohen Druckes im Reaktor sind notwendig, um den in der Luft befindlichen Sauerstoff ausreichend zu lösen und so die Mikroorganismen bei der biologischen Umsetzung der organischen Inhaltstoffe mit ausreichend Sauerstoff zu versorgen.

Ein derartiges Verfahren nach dem Stand der Technik weist zahlreiche Nachteile auf. Um den in der Luft enthaltenen Sauerstoff im Abwasser ausreichend zu lösen, muss der Reaktor ständig unter Überdruck gehalten und die Luft unter hohem Druck in den Reaktor eingebracht werden. Dafür ist eine Reihe von Kompressoren nötig, die in einem nicht unbeträchtlichen Umfang zu den Investitionskosten einer derartigen Anlage beitragen. Zusätzlich sind derartige Kompressoren energie- und wartungsintensiv, was sich negativ auf die Betriebskosten der Anlagen auswirkt. Um die Mikroorganismen bei der biologischen Umsetzung der organischen Inhaltsstoffe mit ausreichend Sauerstoff zu versorgen, muss eine Gasmenge in den Reaktor eingebracht werden, die deutlich über der Gasmenge an benötigtem Sauerstoff liegt. Eine derartige große Gasmenge sorgt in den Reaktoren nach dem Stand der Technik für eine erhöhte Schaumbildung, welche wiederum durch die Zugabe von entschäumenden Mitteln bekämpft werden muss.

Der vorliegenden Erfindung liegt daher die Aufgabe zugrunde, ein Verfahren zur biologischen Reinigung von organisch belasteten Abwässern derart auszugestalten, das die erwähnten Nachteile des Standes der Technik vermieden werden.

Die vorliegende Aufgabe wird verfahrensseitig dadurch gelöst, dass reiner Sauerstoff in den Reaktor eingetragen wird.

Die Anwendung des erfindungsgemäßen Verfahrens weist eine Reihe von Vorteilen auf. Bei der Eintragung von reinem Sauerstoff kommen die physikalischen Eigenschaften für das Lösen von Sauerstoff voll zum Tragen, wie zum Beispiel eine verbesserte und schnellere Löslichkeit von reinem Sauerstoff in Wasser gegenüber Luft und das Erreichen einer deutlich höheren Sättigungskonzentration und somit einer größeren Menge an gelöstem Sauerstoff. Die in den Reaktor eingetragene Gasmenge zur Versorgung der Mikroorganismen mit Sauerstoff kann daher minimiert werden, wodurch es zu einer deutlichen Reduktion der Schaumbildung kommt. Daher kann bei Anwendung des erfindungsgemäßen Verfahrens der Einsatz von entschäumenden Mitteln minimiert bzw. auf ihren Einsatz gänzlich verzichtet werden, was die Wirtschaftlichkeit der Anlage erhöht.

Der Hauptnutzen der Anwendung des erfindungsgemäßen Verfahrens liegt im Wegfall der energie- und wartungsintensiven Kompressoren. Der in einer Tankanlage in flüssiger Form unter Druck vorliegende reine Sauerstoff wird mittels luftbeheizter Verdampfer fremdenergiefrei in den gasförmigen Zustand gebracht, so dass am Verdampferausgang gasförmiger Sauerstoff unter Druck anliegt und in den Reaktor eingetragen werden kann. Der Druck in der Tankanlage wird ebenfalls fremdenergiefrei durch eine Verdampfung des flüssigen Sauerstoffs über luftbeheizte Druckaufbauverdampfer aufrechterhalten. Der Reaktordruck wird über ein Druckhalteventil konstant gehalten, welches im Kopfraum des Reaktors installiert wird. Damit wird vorteilhafterweise für die gesamte Druckerzeugung der Anlage auf energie- und wartungsintensive Kompressoren verzichtet. Der Druck wird ausschließlich über wartungsarme Regelventile eingestellt. Die Erzeugung eines Überdrucks im Reaktor ist aber für eine effektive mikrobielle Umwandlung der biologischen Inhaltsstoffe bei Anwendung des erfindungsgemäßen Verfahrens nicht unbedingt notwendig, so dass prinzipiell auf einen Überdruck im Reaktor verzichtet werden könnte.

Gemäß einer besonders bevorzugten Ausführungsform der Erfindung wird der Sauerstoff über die Saugstromseite einer Flüssigkeitsstrahl-Mischdüse in den Reaktor eingetragen. Bei der Benutzung einer Flüssigkeitsstrahl-Mischdüse zum Sauerstoffeintrag in den Reaktor wird eine bewährte und wartungsarme Technik für das Einbringen von Gasen in eine Lösung verwendet. Durch die stark verminderte Gasmenge sind die spezifischen Scherkräfte des Treibstrahls auf den Gasstrom erhöht, so dass kleinste Gasblasen entstehen, die die Löslichkeit des reinen Sauerstoffs weiter verbessern.

Mit der vorliegenden Erfindung gelingt es insbesondere, die Investitions-, Energie- und Wartungskosten einer biologischen Reinigung von organisch belasteten Abwässern in einem Reaktor zu minimieren. Durch die physikalischen und verfahrenstechnischen Vorteile von reinem Sauerstoff ergibt sich weiterhin eine Leistungssteigerung des Verfahrens.

## Patentansprüche

1. Verfahren zur biologischen Reinigung von organisch belasteten Abwässern in einem Reaktor oder Druckreaktor, bei dem die Inhaltsstoffe unter aeroben Bedingungen mikrobiell umgesetzt werden und das behandelte Abwasser anschließend durch eine Membran- oder Ultrafiltration vom biologischen Schlamm abgetrennt wird, **dadurch gekennzeichnet, dass** reiner Sauerstoff in den Reaktor eingetragen wird.

2. Verfahren nach Anspruch 1, **dadurch gekennzeichnet, dass** der Sauerstoff über die Saugstromseite einer Flüssigkeitsstrahl-Mischdüse in den Reaktor eingetragen wird.
